# EUROPEAN PATENT SPECIFICATION

(11) **EP 3 132 920 B1**
(45) Date of publication and mention of the grant of the patent: **21.10.2020**
(21) Application number: 15780159.8
(22) Date of filing: 16.04.2015
(51) Int. Cl.: B29C 67/00

(54) **MANUFACTURING METHOD FOR THREE-DIMENSIONAL OBJECT AND THREE-DIMENSIONAL OBJECT**
VERFAHREN ZUR HERSTELLUNG EINES 3D-FORMARTIKELS UND 3D-FORMARTIKEL
PROCÉDÉ DE PRODUCTION D'ARTICLE DE FORME TRIDIMENSIONNELLE ET ARTICLE DE FORME TRIDIMENSIONNELLE

(30) Priority: 16.04.2014 JP 2014084917; 16.12.2014 JP 2014254564
(43) Date of publication of application: 22.02.2017
(73) Proprietor: Mimaki Engineering Co., Ltd., Tomi-shi, Nagano 389-0512 (JP)
(72) Inventor: HASHIZUME, Hironori, Tomi-city Nagano 389-0512 (JP)
(74) Representative: Hinkelmann, Klaus
(86) International application number: PCT/JP2015/061656
(87) International publication number: WO 2015/159936

(56) References cited:
- EP-A1- 1 522 412
- WO-A1-2005/037529
- WO-A1-2012/132463
- JP-A- 2003 011 237
- JP-A- 2005 125 324
- JP-A- 2011 073 163
- JP-A- 2012 232 578
- JP-A- 2015 112 836
- US-A1- 2004 187 714
- US-A1- 2010 009 133
- US-A1- 2013 073 068
- US-B1- 6 658 314

## Description

### TECHNICAL FIELD

This invention relates to a manufacturing method for a three-dimensional object according to claim 1, and a three-dimensional object according to claim 4.

### BACKGROUND ART

Conventionally, modeling materials used to manufacture three-dimensional objects each include only one type of modeling material ink (for example, see Patent Literature 1).

In document US 2013/073068 A1, a manufacturing method for a three-dimensional object using photo-curing inks for forming a layer is disclosed. Two types of the photo-curing inks are used, the two types of the photo-curing inks being curable by being irradiated with light and having degrees of hardness that mutually differ.

### CITATION LIST

### PATENT LITERATURE

Patent Literature 1: Japanese Unexamined Patent Publication No. 2004-255839 (published on September 16, 2004)

### SUMMARY

### TECHNICAL PROBLEMS

In case of using an ink of ultraviolet curing type to obtain a modeling material for three-dimensional object, curing the ink by ultraviolet irradiation may provoke volume shrinkage, resulting in distortion and/or warp of a three-dimensional object obtained. Any warp in layers of the modeling material makes it difficult to accumulate the layers.

To desirably minimize the warp, using an ink that sustains pliability against ultraviolet irradiation may be contemplated. Such an ink, however, fails to impart adequate hardness to the modeling material.

To address the issue, this invention is directed to providing a three-dimensional object achieving well-suppressed volume shrinkage and an adequate degree of hardness.

### SOLUTIONS TO THE PROBLEMS

To this end, this invention provides a manufacturing method for a three-dimensional object, including a modeling material discharging step of discharging an ink that forms a modeling material. This method uses, as an ink that forms at least a part of the modeling material, at least two types of photo-curing inks curable by being irradiated with light and having degrees of hardness that mutually differ in eight hours after being irradiated with light. The modeling material discharging step performs the ink discharge toward a target of the ink that forms the modeling material in a manner that dots of the at least two types of photo-curing inks are mixedly present. In a layer the ink discharge is randomly performed based on a specific computational formula so as to uniformly distribute the dots.

Using the inks that differ from each other in hardness after curing may allow the modeling material to achieve hardness as well as enough elasticity to prevent distortion and/or warp. One of the inks is lower than the other in hardness. By mixedly using such inks having different degrees of hardness, the modeling material may have pliability serving to alleviate stress generated by volume shrinkage of the ink higher in hardness.

In the three-dimensional object manufacturing method disclosed herein, the modeling material may include a molding portion and a decorating portion that decorates the molding portion, and the at least two types of photo-curing inks may be used to form the molding portion.

It is mostly the molding portion that configures the shape of a three-dimensional object to be obtained. By ensuring viscosity and hardness of this molding portion, volume shrinkage of the three-dimensional object may be significantly suppressed. As a result, a three-dimensional object further prevented from warping and decorated as desired may be successfully manufactured.

In the three-dimensional object manufacturing method disclosed herein, the three-dimensional object thereby manufactured includes a plurality of structural parts. In the modeling material discharging step, the at least two types of photo-curing inks may be discharged in a manner that a mixing ratio of the at least two types of photo-curing inks differs between at least two of the plurality of structural parts.

By mixing two or more different photo-curing inks that differ in hardness after curing by different ratios for different structural parts of the three-dimensional object, the object obtained may have some structural parts improved in rigidity and the other structural parts improved in flexibility. As a result, a broader range of three-dimensional objects may be favorably manufacturable.

In a three-dimensional object disclosed herein, at least two types of photo-curing inks having degrees of hardness that mutually differ in eight hours after being irradiated with light are used to form at least a part of a modeling material.

One of the inks is lower in hardness than the other. Using the ink lower in hardness in addition to the other ink may impart pliability to the modeling material, the pliability serving to alleviate stress generated by volume shrinkage of the ink higher in hardness.

### EFFECT OF THE INVENTION

This invention may enable the manufacture of a three-dimensional object achieving well-suppressed volume shrinkage and an adequate degree of hardness.

### BRIEF DESCRIPTION OF THE DRAWINGS

FIG. 1 is a schematic drawing of arranged dots of two types of photo-curing inks, i.e. a first photo-curing ink 1 and a second photo-curing ink 2, used in printing in accordance with an embodiment of the three-dimensional object manufacturing method disclosed herein.
FIG. 2 is a drawing of a pencil case 10 representing an embodiment of the three-dimensional object disclosed herein.

### DESCRIPTION OF EMBODIMENTS

### [Three-dimensional object manufacturing method of this invention]

A three-dimensional object manufacturing method disclosed herein includes a modeling material discharging step of discharging an ink that forms a modeling material. The modeling material discharging step uses, as an ink that forms at least a part of the modeling material, at least two types of photo-curing inks curable by being irradiated with light and having degrees of hardness that mutually differ in eight hours after being irradiated with light. The modeling material discharging step performs the ink discharge toward a target of the modeling material in a manner that dots of the at least two types of photo-curing inks are mixedly present. The photo-curing inks having degrees of hardness that mutually differ in eight hours after being irradiated with light also differ from each other in pliability and extension percentage in eight hours after being irradiated with light.

The modeling material configures the shape of a three-dimensional object. The three-dimensional object manufacturing method disclosed herein may further use, if necessary, a support material for supporting the shape of the modeling material during the manufacturing process. Specifically, the manufacturing method may further include a step of discharging an ink that forms the support material. The support material may be removed later or may be left unremoved depending on an end use of the manufactured object.

Used as the ink that forms the modeling material are at least two types of photo-curing inks curable by being irradiated with light and having degrees of hardness that mutually differ in eight hours after being irradiated with light.

The photo-curing inks may preferably be inks of ultraviolet curing type. When two types of photo-curing inks are combined and used, preferably, one of the inks has a degree of hardness greater than or equal to 3H and less than or equal to 5H in eight hours after being irradiated with light, while the other one of the inks has a degree of hardness greater than or equal to HB and less than or equal to H in eight hours after being irradiated with light. Combining such two inks may provide a modeling material having adequate hardness and less likely to warp. Among the commercially available products, inks supplied by MIMAKI ENGINEERING CO., LTD., LH-100, LF-140, LUS-150, LF-200, and LUS-200, for example, may be suitably combined and used. For example, the inks LH-100 and LF-140, or the inks LF-140 and LUS-150 may be combined and used.

The modeling material including at least two types of photo-curing inks having degrees of hardness that mutually differ in eight hours after being irradiated with light may be the whole or a part of the modeling material used to manufacture a three-dimensional object.

By including the at least two types of photo-curing inks in a part of the modeling material used to manufacture the three-dimensional object, volume shrinkage may be suppressed in at least the part. In the event that the three-dimensional object includes any structural parts in which the at least two types of photo-curing inks are unused, the modeling material including the at least two types of photo-curing inks may preferably account for the largest volume of the whole modeling material used to manufacture the three-dimensional object. This may allow the three-dimensional object to be manufactured with adequate hardness while being substantially prevented from warping.

In a mode where a part of the modeling material for the three-dimensional object includes the at least two types of photo-curing inks, the rest of the modeling material may be a decorating portion for the part of the modeling material. For example, the part of the modeling material may be a molding portion that configures the shape of the three-dimensional object, while the decorating portion decorates the molding portion. By using the modeling material including the molding portion and the decorating portion, the three-dimensional object manufactured may be decorated as desired with its volume shrinkage being effectively suppressed. Specific examples of the decoration may include coloring and overcoating with a clear ink.

The modeling material discharging step discharges the ink that forms the modeling material. Specifically, the ink discharge is performed toward a target of the ink in a manner that dots of the at least two types of photo-curing inks are mixedly present.

The dots of two or more different photo-curing inks are arranged in a manner that they are mixedly present. According to the invention, the dots of two types of photo-curing inks are randomly arranged. Some or all of the dots may be overlapping with one another. The ink discharge may be controlled through computations so as to arrange the dots to overlap with one another. The ink discharge may be performed through computations so as to contiguously arrange as many dots of different inks as possible. For example, ratios of inks to be discharged that include the at least two types of photo-curing inks may be input to a printer beforehand so as to perform the ink discharge in accordance with a masking process preprogrammed in the printer. Being "mixedly present" in this description means that dots of the at least two types of photo-curing inks are arranged next to one another. Specifically, there are regions that repeatedly appear per 100 µm² where dots of the at least two types of photo-curing ink are combined.

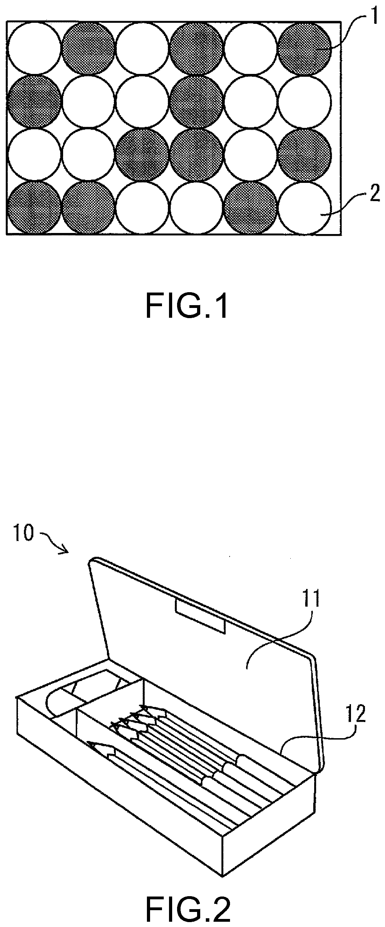

With reference to FIG. 1, mixedly arranged dots of the two types of photo-curing inks are described. FIG. 1 is a schematic drawing of arranged dots of two types of photo-curing inks, i.e. a first photo-curing ink 1 and a second photo-curing ink 2, used in printing in accordance with an embodiment of the three-dimensional object manufacturing method disclosed herein.

As seen in FIG. 1 illustrating arranged ink droplets in plan view, two types of photo-curing inks, i.e. first photo-curing ink 1 and second photo-curing ink 2, are randomly arranged. The first photo-curing ink 1 has a degree of hardness greater than or equal to 3H and less than or equal to 5H in eight hours after being irradiated with light. The second photo-curing ink 2 has a degree of hardness greater than or equal to HB and less than or equal to H in eight hours after being irradiated with light.

The ink discharge is randomly performed based on a specific computational formula so as to uniformly distribute the dots. The discharge of the respective inks may not necessarily be controlled differently for each nozzle array. The ink discharge should preferably be based on the same computational formula for all of the nozzle arrays. The inks should preferably be discharged from different heads, respectively.

During the manufacturing of the three-dimensional object, the target of the ink that forms the modeling material denotes, for example, a substrate at the time of forming a first layer. The substrate used may preferably be removable after the three-dimensional object is manufactured. As for a second layer and subsequent layers, the target denotes the layer preceding a currently formed one of the layers. By forming an (n)th layer and then forming an (n+1)th layer thereon, the three-dimensional object is manufacturable.

### [Three-dimensional object of this invention]

In the three-dimensional object disclosed herein, at least two types of photo-curing inks having degrees of hardness that mutually differ in eight hours after being irradiated with light are used to form at least a part of a modeling material.

By including the inks that differ from each other in hardness after curing in at least a part of the modeling material, the three-dimensional object may achieve, in its structural part(s) formed by the part of the modeling material, hardness as well as enough elasticity to prevent distortion and/or warp.

The specifics of the at least two types of photo-curing inks conform to the description in [Three-dimensional object manufacturing method of this invention]. The three-dimensional object disclosed herein may be favorably manufactured by the three-dimensional object manufacturing method described so far in this invention.

The modeling material including the at least two types of photo-curing inks may be the whole or a part of the modeling material used to manufacture the three-dimensional object. In the event that the modeling material including the at least two types of photo-curing inks is a part of the modeling material for the three-dimensional object, the rest of the modeling material may serve to decorate the part of the modeling material. The part of the modeling material may be a molding portion that configures the shape of the three-dimensional object, while the rest of the modeling material may be a decorating portion that decorates the molding portion. By using such a modeling material, the three-dimensional object manufactured may be decorated as desired with its volume shrinkage being effectively suppressed. Specific examples of the decoration may include coloring and overcoating with a clear ink.

The mixing ratio of the at least two types of photo-curing inks may be changed for each structural part of the three-dimensional object during the manufacturing process. For example, the ratio of the ink having a higher degree of hardness in eight hours may be increased to improve the rigidity of a structural part(s) formed with this ink, or the ratio of the ink having a lower degree of hardness in eight hours may be increased to improve the flexibility of a structural part(s) formed with this ink. The "mixing ratio" in this description refers to the ratio of the at least two types of photo-curing inks that are mixed to the whole ink quantity discharged per unit area. In the event that the three-dimensional object has a plurality of structural parts, the mixing ratio may be changed in, for example, two of the structural parts or may be changed in all of the structural parts.

A pencil case 10 representing an embodiment of the three-dimensional object disclosed herein is hereinafter described with reference to FIG. 2. FIG. 2 is a drawing of the pencil case 10 according to an embodiment of the three-dimensional object disclosed herein. As illustrated in FIG. 2, the pencil case 10 has a cabinet 11 and a bent portion 12. High rigidity is required of the cabinet 11 for protection of an article to be put inside. To meet the requirement, the ratio of the first photo-curing ink 1 is increased for the cabinet 11 to improve rigidity. High flexibility is required of the bent portion 12 for the cabinet 11 to be easily opened and closed. To meet the requirement, the ratio of the second photo-curing ink 2 is increased for the bent portion 12 to improve flexibility.

This invention is not necessarily limited to the embodiments described so far and may be carried out in many other forms. The technical scope of this invention encompasses any modifications within the technical scope defined by the appended claims and embodiments obtained by variously combining the technical means disclosed herein.

### EXAMPLE

The inks, LH-100, LF-140, LUS-150, LF-200, and LUS-200 were used as test materials, and their degrees of hardness (pencil hardness) and degrees of pliability (extension percentages) were measured.

The degrees of hardness and pliability were measured as described below. Printing operations were carried out by an ink jet printer (UJF-3042FX; supplied by MIMAKI ENGINEERING CO., LTD.) by using the respective inks. Then, degrees of hardness and pliability of the inks in eight hours after the printing operations ended were respectively measured. Because the time between landing of ink droplets onto media and starting of ultraviolet light irradiation is as short as approximately 0.1 to 0.2 seconds, "in eight hours after the printing operations ended" can be rephrased as "in eight hours after the inks were irradiated with ultraviolet light".

Pursuant to the JIS K5600-5-4, scratch hardness (pencil hardness test) was measured to evaluate hardness.

To evaluate pliability, extension percentage measurement was performed by AUTOGRAPH AGS-1KNJ (supplied by Shimadzu Corporation).

The result obtained is shown below.

| | | |
|---|---|---|
| LH-100 | Hardness: 5H | Pliability: Unextendable |
| LF-140 | Hardness: H to 3H | Pliability: 140% |
| LF-200 | Hardness: HB to H | Pliability: 200% |
| LUS-150 | Hardness: H to 3H | Pliability: 150% |
| LUS-200 | Hardness: HB to H | Pliability: 200% |

### INDUSTRIAL APPLICABILITY

This invention is usefully applicable to the manufacturing of three-dimensional objects.

## Claims

1. A manufacturing method for a three-dimensional object (10) using photo-curing inks for forming a layer, comprising:
a modeling material discharging step of discharging an ink (1,2) that forms a layer of the modeling material; and
use of at least two types of the photo-curing inks (1,2) as an ink that forms at least a part of the modeling material, the at least two types of the photo-curing inks (1,2) being curable by being irradiated with light and having degrees of hardness that mutually differ in eight hours after being irradiated with light,
**characterized in that** the modeling material discharging step performs the ink discharge toward a target of the ink that forms the modeling material in a manner that dots of the at least two types of the photo-curing inks (1,2) are mixedly present, and
wherein in a layer the ink discharge is randomly performed based on a specific computational formula so as to uniformly distribute the dots.

2. The manufacturing method for the three-dimensional object (10) as set forth in claim 1, wherein the modeling material comprises a molding portion and a decorating portion that decorates the molding portion; and
the at least two types of photo-curing inks (1,2) are used to form the molding portion.

3. The manufacturing method for the three-dimensional object (10) as set forth in claim 1 or 2, wherein the three-dimensional object (10) comprises a plurality of structural parts (11,12); and
in the modeling material discharging step, the at least two types of the two photo-curing inks (1,2) are discharged in a manner that a mixing ratio of the at least two
types of the photo-curing inks (1,2) differs between at least two of the plurality of structural parts (11,12).

4. A three-dimensional object (10), comprising:
a plurality of layers formed each by photo-curing inks (1,2),
wherein at least two types of the photo-curing inks (1,2) having degrees of hardness that mutually differ in eight hours after being irradiated with light are used to form at least a part of a modeling material, and wherein in a layer the ink discharge has been randomly performed based on a specific computational formula so as to uniformly distribute the dots in the layers.

## Patentansprüche

1. Ein Herstellungsverfahren für ein dreidimensionales Objekt (10) unter Verwendung lichthärtender Tinten zur Bildung einer Schicht, umfassend:
einen Modelliermaterial-Ausstoßschritt des Ausstoßens einer Tinte (1,2), die eine Schicht des Modelliermaterials bildet; und
Verwendung von mindestens zwei Typen der lichthärtenden Tinten (1,2) als eine Tinte, die mindestens einen Teil des Modelliermaterials bildet, wobei die mindestens zwei Typen der lichthärtenden Tinten (1,2) durch Bestrahlung mit Licht härtbar sind und Härtegrade aufweisen, die sich innerhalb von acht Stunden nach der Bestrahlung mit Licht gegenseitig unterscheiden,
**dadurch gekennzeichnet, dass** der Modelliermaterial-Ausstoßschritt den Tintenausstoß in Richtung auf ein Ziel der Tinte, die das Modelliermaterial bildet, in einer Weise durchführt, dass Punkte der mindestens zwei Typen der lichthärtenden Tinten (1, 2) gemischt vorhanden sind, und
wobei in einer Schicht der Tintenausstoß zufällig auf der Grundlage einer spezifischen Berechnungsformel durchgeführt wird, um die Punkte gleichmäßig zu verteilen.

2. Das Herstellungsverfahren für das dreidimensionale Objekt (10) wie in Anspruch 1, wobei das Modelliermaterial einen Gussteil und einen Dekorationsteil, der den Gussteil dekoriert, umfasst; und die mindestens zwei Arten von lichthärtenden Druckfarben (1,2) zur Herstellung des Formteils verwendet werden.

3. Das Herstellungsverfahren für das dreidimensionale Objekt (10) nach Anspruch 1 oder 2, wobei das dreidimensionale Objekt (10) eine Vielzahl von Strukturteilen (11, 12) umfasst; und im Modelliermaterial-Austragsschritt die mindestens zwei Arten lichthärtender Tinten (1,2) in einer Weise ausgestoßen werden, dass ein Mischungsverhältnis der mindestens zwei Typen der lichthärtenden Tinten (1,2) sich zwischen mindestens zwei der Vielzahl von Strukturteilen (11,12) unterscheidet.

4. Ein dreidimensionales Objekt (10), umfassend:
eine Vielzahl von Schichten, die jeweils durch lichthärtende Tinten (1,2) gebildet werden, wobei mindestens zwei Typen der lichthärtenden Tinten (1,2) mit Härtegraden, die sich innerhalb von acht Stunden nach Bestrahlung mit Licht voneinander unterscheiden, verwendet werden, um mindestens einen Teil eines Modelliermaterials zu bilden, und wobei in einer Schicht der Tintenausstoß auf der Grundlage einer spezifischen Berechnungsformel zufällig durchgeführt wurde, um die Punkte in den Schichten gleichmäßig zu verteilen.

## Revendications

1. Procédé de fabrication d'un objet tridimensionnel (10) utilisant des encres photodurcissables pour former une couche, comprenant :
une étape de décharge de matériau de modélisation consistant à décharger une encre (1,2) qui forme une couche du matériau de modélisation ; et
utilisation d'au moins deux types d'encres photodurcissables (1,2) comme encre qui forme au moins une partie du matériau de modélisation, les au moins deux types d'encres photodurcissables (1,2) étant durcissables par irradiation avec de la lumière et ayant des degrés de dureté qui diffèrent mutuellement dans les huit heures suivant l'irradiation avec de la lumière,
**caractérisé en ce que** l'étape de décharge du matériau de modélisation effectue la décharge de l'encre vers une cible de l'encre qui forme le matériau de modélisation d'une manière telle que des points des au moins deux types d'encres photodurcissables (1,2) sont présents de manière mixte, et
dans laquelle, dans une couche, la décharge d'encre est effectuée de manière aléatoire sur la base d'une formule de calcul spécifique de manière à répartir uniformément les points.

2. La procédé de fabrication de l'objet tridimensionnel (10) selon la revendication 1, dans laquelle le matériau de modélisation comprend une partie de moulage et une partie de décoration qui décore la partie de moulage ; et au moins deux types d'encres photodurcissables (1,2) sont utilisés pour former la partie de moulage.

3. La procédé de fabrication de l'objet tridimensionnel (10) selon la revendication 1 ou 2, dans lequel l'objet tridimensionnel (10) comprend une pluralité de parties structurelles (11,12) ; et
dans l'étape de déchargement du matériel de modélisation, les au moins deux types d'encres photodurcissables (1,2) sont déchargés de manière à ce qu'un rapport de mélange d'au moins deux types d'encres photodurcissables (1,2) diffèrent entre au moins deux des pluralité de parties structurelles (11,12).

4. Un objet tridimensionnel (10), comprenant:
une pluralité de couches formées chacune par des encres photodurcissables (1,2), dans lequel au moins deux types d'encres photodurcissables (1,2) ayant des degrés de dureté qui diffèrent mutuellement dans les huit heures suivant leur irradiation par la lumière sont utilisés pour former au moins une partie d'un matériau de modélisation, et dans lequel, dans une couche, la décharge d'encre a été effectuée de manière aléatoire sur la base d'une formule de calcul spécifique de manière à répartir uniformément les points dans les couches.
